Europäisches Patentamt

European Patent Office

Office européen des brevets

(11) Numéro de publication: **0 070 784**
A2

# (12) DEMANDE DE BREVET EUROPEEN

(21) Numéro de dépôt: **82401350.2**

(22) Date de dépôt: **20.07.82**

(51) Int. Cl.³: **C 08 J 5/18,** C 08 J 7/04, B 05 D 7/04, B 05 D 5/04

(30) Priorité: **20.07.81 FR 8114099**

(43) Date de publication de la demande: **26.01.83**
**Bulletin 83/4**

(84) Etats contractants désignés: **AT BE CH DE GB IT LI LU NL SE**

(71) Demandeur: **ARJOMARI-PRIOUX Société anonyme dite, 3, rue du Pont de Lodi, F-75261 Paris Cedex 06 (FR)**

(72) Inventeur: **Vernois, Michel, 37, rue du Belvédère, F-38500 Voiron (FR)**

(74) Mandataire: **Richebourg, Michel François et al, Cabinet Beau de Loménie 55, rue d'Amsterdam, F-75008 Paris (FR)**

(54) Nouveau papier synthétique léger imprimable et son procédé de préparation.

㉗ La présente invention concerne un nouveau papier synthétique léger imprimable obtenu par couchage d'un film de polypropylène biétiré d'épaisseur comprise entre 10 et 30 microns d'une opacité comprise entre 50 et 80%, ledit film ayant été rendu apte à fixer une couche en milieux aqueux, ledit couchage étant réalisé par dépôt de 4 à 10 g/m² et par face d'une couche comportant une charge opacifiante, une charge d'imprimabilité, au moins un liant latex et aux moins une résine thermodurcissable utilisée à raison de 5 à 20% en poids par rapport au liant.

La présente invention concerne également le procédé utilisé pour réaliser ledit nouveau papier.

Nouveau papier synthétique léger imprimable et son procédé de préparation.

La présente invention concerne un nouveau papier synthétique léger imprimable et le procédé de fabrication de ce papier.

On a déjà proposé, à la place des papiers cellulosiques classiques, divers papiers synthétiques réalisés à partir d'un film d'une résine synthétique. Dans ce domaine les papiers sur lesquels on peut écrire ou effectuer des impressions à l'aide des techniques connues, constituent une classe particulière impliquant des propriétés spécifiques.

C'est ainsi qu'on a déjà proposé de réaliser des papiers synthétiques couchés selon des techniques et avec des machines classiques ; ce couchage implique le dépôt, sur la ou les surfaces d'un film d'une résine thermoplastique, d'une couche adhérente comportant notamment des charges qui confèrent à la couche l'imprimabilité nécessaire et un liant qui permet de lier les particules de ces charges, entre elles et avec le film thermoplastique.

La pratique montre aujourd'hui que les papiers synthétiques imprimables connus, réalisés par couchage, utilisent toujours comme film en résine synthétique un film d'une épaisseur assez grande, c'est-à-dire d'une épaisseur supérieure à 50 microns, donnant naissance à des papiers relativement lourds. Les papiers qui sont commercialisés ont de ce fait des domaines d'utilisation bien délimités.

Il est apparu souhaitable de disposer d'un papier synthétique léger imprimable obtenu par couchage, permettant une utilisation dans le domaine des revues, des catalogues et des imprimés publicitaires ; la légèreté dudit papier constitue un avantage économique essentiel ; ce sont là les buts de la présente invention.

Le nouveau papier synthétique léger imprimable selon la présente invention est caractérisé par les éléments suivants :
- il est réalisé à partir d'un film de polypropylène biétiré d'une épaisseur comprise entre 10 et 30 microns, d'une opacité de 50% à 80% et d'une densité comprise entre 0,5 et 0,85, ce film ayant été rendu apte à fixer une couche en milieu aqueux par des techniques connues de préférence par traitement Corona ;

- ledit film est couché sur ses deux faces ; la couche, déposée à raison de 4 à 10 g/m$^2$ et par face, comporte :

. au moins une charge opacifiante, de préférence de l'oxyde de
titane,

. au moins une charge d'imprimabilité, de préférence du carbonate
de calcium,

. au moins un liant du type latex, de préférence un latex de type
styrène-acrylique, utilisé à raison de 10 à 50% en poids sec par rapport au poids de l'ensemble des charges, et

. au moins une résine thermodurcissable à température de l'ordre
de 110 à 150°C choisie parmi les résines mélamine-formol et urée-
formol, cette résine étant utilisée à raison de 5 à 20% en poids sec
par rapport au liant latex,
le papier obtenu présentant un grammage de 13 à 46 g/m$^2$.

Ainsi selon l'invention le film de base est un film
mince de polypropylène biétiré d'une épaisseur comprise entre 10 et
30 microns. Il a été trouvé en effet qu'un tel film, malgré sa très
faible épaisseur, pouvait subir, sans déformation ni rupture, les
manipulations imposées par les techniques industrielles de couchage
du papier. De plus, le choix d'un film de faible densité (entre 0,5
et 0,85) présente pour le produit fini des avantages notamment dans
le domaine économique (gain de poids donc diminution des coûts lors
des transports par exemple). Mais ce film doit, de plus, avoir une
certaine opacité et avoir été traité par des techniques connues pour
rendre les films de polyoléfine aptes à fixer une couche en milieu
aqueux. On a trouvé en effet que, lorsqu'un tel film de polypropylène
avait été traité en appliquant sur ses faces une décharge de type
Corona, il était apte à se lier solidement avec la couche de latex et
de résine qu'il recevra ultérieurement. Le choix d'un tel film comme
élément de base du papier selon l'invention est dû aux propriétés
suivantes dudit film : stabilité dimensionnelle notamment aux hautes
températures, faible poids, propriétés mécaniques élevées malgré une
très faible épaisseur, possibilité, grâce à un traitement approprié,
de retenir une couche, densité faible, économie.

L'opacité du film de polypropylène biétiré est déterminée selon la norme AFNOR Q 03040 ; cette propriété est importante car il est difficile d'obtenir un papier suffisamment opaque - donc utilisable recto-verso pour les emplois d'impression - en utilisant un film de polypropylène transparent et en réalisant l'opacification nécessaire seulement par modification de la composition et éventuellement de l'épaisseur de la couche.

Le couchage du film de polypropylène biétiré est effectué selon les techniques papetières courantes à partir d'une dispersion aqueuse convenable. Parmi ces techniques papetières courantes on peut citer : l'enduction à lame d'air, à racle traînant, en champion par reverse-roll ou par Bill-blade.

La couche devra comporter des charges visant à conférer, d'une part, un complément d'opacité et, d'autre part, les propriétés d'imprimabilité requises (c'est-à-dire notamment une bonne receptivité et une vitesse de séchage vis-à-vis des encres adaptée aux moyens d'impression). Parmi les charges connues, utilisables, on peut citer : les kaolins, les carbonates, l'oxyde de titane, le talc, les silico-aluminates et le sulfate de baryum. Il a été trouvé que, parmi ces charges et compte tenu des propriétés du film biétiré du polypropylène, il convenait d'utiliser de préférence pour 100 parties de charges :

- de 30 à 60 parties (en poids) de $TiO_2$ (anatase ou rutile) ;
- de 70 à 40 parties (en poids) de carbonate de calcium finement broyé (diamètre moyen des particules de 1 à 2 microns environ).

Parmi les latex connus, utilisables comme liants, on pourra employer des liants acryliques, des copolymères styrène-acrylates, des copolymères styrène-butadiène, des polyacrylonitriles, des polyisoprènes ou des copolymères éthylène-acétate de vinyle. Mais, parmi ces latex, le produit préféré est le copolymère styrène-acrylate. Ce choix a une certaine importance car il semble bien que, lors du séchage des couches, ce copolymère subit, du fait de la présence de la résine mélamine-formol ou urée-formol, une certaine réticulation et participe ainsi aux propriétés d'adhésion de la couche au film. Le latex doit être utilisé de façon à représenter environ 10 à 50% en poids sec par rapport à l'ensemble des charges : une telle proportion peut être considérée comme connue dans le domaine du couchage du papier.

La couche doit comporter également une résine mélamine-formol ou urée-formol. On a déjà préconisé l'emploi d'une résine de ce type pour réaliser le couchage de film en matériau thermoplastique mais en quantité nettement plus faible que dans la présente invention. Dans la présente invention, cette résine joue un rôle important puisque non seulement, en conjonction avec le latex, elle améliore l'accrochage de la couche de couchage sur le film (comme indiqué ci-dessus) mais encore elle contribue à conférer au papier final la raideur désirée.

Pour réaliser une bonne dispersion de ces charges dans l'eau formant la suspension de couchage, il est parfois souhaitable d'ajouter à cette eau un agent de dispersion tel que, par exemple, un sel de sodium d'un acide polycarboxylique ou un composé de polyphosphate. Il peut être également intéressant d'ajouter des agents tensio-actifs qui facilitent le mouillage du film vis-à-vis de la couche aqueuse. Ces agents tensioactifs sont du type des sulfonates de sodium paraffiniques, des éthers d'alcoyle, des alkylaryles de poly-glycols ou des combinaisons de ces produits.

Il va de soi que la couche pourra comporter, en faible quantité des adjuvants tels que des azurants optiques, des agents antimousses, des agents antistatiques et des modificateurs de rhéologie.

Le procédé de couchage est identique au procédé classique de couchage du papier à savoir :

- réalisation d'un mélange aqueux comportant en concentration voulue les divers ingrédients de la couche,

- dépôt de ce mélange sur le film de polypropylène avec réglage de l'épaisseur du dépôt,

- chauffage du film enduit de la couche à une température comprise entre 110 à 150°C en vue d'une réticulation de l'ensemble latex-résine mélamine-formol contenu dans la couche.

On obtient ainsi industriellement selon l'invention un nouveau papier synthétique léger imprimable apte à se substituer par exemple aux papiers dits L.W.C. (Light Weight Coated), au papier magazine ou au papier journal connus pour leur aptitude à l'impression à très grande vitesse principalement par des procédés de type héliogravure offset ou flexographie. De plus, le papier selon l'invention présente, par rapport à ces papiers, un certain nombre d'avantages parmi lesquels on peut citer d'excellentes propriétés mécaniques, une très grande stabilité dimensionnelle aux variations d'humidité relative et, pour des propriétés mécaniques similaires, un poids par unité de surface très inférieur.

Les exemples non limitatifs suivants illustrent l'invention.

Exemple 1.

On utilise comme film de départ un film de polypropylène biétiré mécaniquement présentant une épaisseur de 25 microns, une densité de 0,56 et une opacité de 74%.

Ce film est traité sur ses deux faces par une effluve électrique de type Corona.

On utilise pour réaliser la couche de couchage une dispersion aqueuse contenant :

- 0,9 litre d'eau,
- 0,375 kg de $TiO_2$ (de type anatase)
- 0,375 kg de carbonate de calcium précipité dont les grains ont un diamètre moyen de l'ordre de 1,5 micron,
- 0,200 kg d'un latex formé d'un copolymère de styrène et d'acrylate,
- 0,020 kg de résine mélamine-formol.

Cette dispersion comporte également :

- un agent dispersant,
- un agent antimousse,
- un agent de stabilisation de l'émulsion, et
- un agent antiblocking.

On réalise l'enduction du film de polypropylène biétiré sur un appareil de couchage des papiers utilisant la technique dite à lame d'air et on dépose ainsi sur chaque face une quantité de dispersion correspondant à environ 6 $g/m^2$ de substances sèches. Le film enduit est porté dans le séchoir à une température d'environ 140°C.

Le papier synthétique obtenu a les caractéristiques suivantes :

- poids : 26 $g/m^2$
- opacité : 90%.

0070784

Exemple 2.

On utilise comme film de base un film de polypropylène biétiré (HERCULES W.T. 503) ayant une épaisseur de 28 microns, une densité de 0,58 et une opacité de 60%.

Ce film est traité sur ses deux faces par une effluve électrique type Corona.

Le film est ensuite couché en utilisant une dispersion aqueuse telle que décrite dans l'exemple 1 et on dépose ainsi 9 g/m$^2$ et par face de couche ,

On obtient ainsi un papier imprimable de :

- 34 g/m$^2$,

- 86% d'opacité.

REVENDICATIONS
----------------------------

1.          Nouveau papier synthétique léger imprimable ayant un grammage compris entre 13 et 46 g/m$^2$ obtenu par couchage sur ses deux faces d'un film de matière thermoplastique, caractérisé en ce que :

- ledit film de matière thermoplastique est un film de polypropylène biétiré d'épaisseur comprise entre 10 et 30 microns, d'une opacité comprise entre 50% et 80% d'une densité comprise entre 0,5 et 0,85 et rendu apte à fixer une couche en milieu aqueux de préférence par un traitement Corona, et

- ledit couchage, réalisé selon les techniques papetières, consiste à déposer, à raison de 4 à 10 g/m$^2$ et par face, une couche comportant :

    . au moins une charge opacifiante, de préférence d'oxyde de titane,

    . au moins une charge d'imprimabilité, de préférence du carbonate de calcium,

    . au moins un liant de type latex, de préférence un latex styrène-acrylique, utilisé à raison de 10 à 50% en poids sec par rapport au poids de l'ensemble des charges, et

    . au moins une résine thermodurcissable à température de 110 à 150°C choisie parmi les résines mélamine-formol et urée-formol, ladite résine étant utilisée à raison de 5 à 20% en poids sec par rapport au liant latex.

2.          Nouveau papier selon la revendication 1, caractérisé en ce qu'on utilise, pour 100 parties en poids de charges, de 30 à 60 parties en poids de TiO$_2$ et de 70 à 40 parties en poids de carbonate de calcium.

3.          Procédé pour la réalisation d'un papier synthétique selon l'une des revendications 1 et 2, caractérisé en ce qu'on utilise comme produit de départ un film de polypropylène biorienté d'épaisseur comprise entre 10 et 30 microns, d'une opacité comprise entre 50% et 80%, d'une densité comprise entre 0,5 et 0,85 et rendu apte à fixer une couche en milieu aqueux de préférence par un traitement Corona et que l'on dépose sur les deux faces dudit film, en utilisant les techniques et les machines industrielles de couchage du papier, une solution aqueuse contenant :

. au moins une charge opacifiante, de préférence d'oxyde de titane,

. au moins une charge d'imprimabilité, de préférence du carbonate de calcium,

. au moins un liant de type latex, de préférence un latex styrène-acrylique, utilisé à raison de 10 à 50% en poids sec par rapport au poids de l'ensemble des charges, et

. au moins une résine thermodurcissable à température de 110 à 150°C choisie parmi les résines mélamine-formol et urée-formol, ladite résine étant utilisée à raison de 5 à 20% en poids sec par rapport au liant latex,

ladite solution étant conditionnée de façon que, après séchage du film enduit à une température comprise entre 110 et 150°C, chaque couche représente 4 à 10 g/m$^2$ de matière sèche.